# EUROPEAN PATENT SPECIFICATION

(11) **EP 3 318 481 B1**
(45) Date of publication and mention of the grant of the patent: **08.07.2020**
(21) Application number: 16382507.8
(22) Date of filing: 04.11.2016
(51) Int. Cl.: B64C 3/28, B32B 5/02, B64D 45/00

(54) **PANEL STRUCTURE FOR AN AIRCRAFT AND MANUFACTURING METHOD THEREOF**
PLATTENSTRUKTUR FÜR EIN FLUGZEUG UND HERSTELLUNGSVERFAHREN DAFÜR
STRUCTURE DE PANNEAU POUR AÉRONEF ET SON PROCÉDÉ DE FABRICATION

(43) Date of publication of application: 09.05.2018
(73) Proprietor: Airbus Operations, S.L., 28906 Getafe (Madrid) (ES); Airbus Operations (S.A.S.), 31060 Toulouse Cedex 9 (FR)
(72) Inventor: TORAL VAZQUEZ, Javier, 28906 Getafe (Madrid) (ES); MARTINO GONZALEZ, Esteban, 28906 Getafe (Madrid) (ES); FOLCH CORTES, Diego, 28906 Getafe (Madrid) (ES); GOYA ABAURREA, Pablo, 28906 Getafe (Madrid) (ES); VOTSIOS, Vasilis, 28906 Getafe (Madrid) (ES); FOUINNETAU, Michel, 31060 Toulouse Cedex 09 (FR); ROUMEGAS, Sylvain, 31060 Toulouse Cedex 09 (FR)
(74) Representative: Herrero & Asociados, S.L.

(56) References cited:
- EP-A1- 1 475 304
- EP-A1- 2 196 309
- WO-A1-90/01857
- US-A- 2 371 754
- US-A1- 2008 258 009
- US-A1- 2011 117 309

## Description

### Object of the invention

The present invention refers in general to panel structures for the manufacture of an aircraft, in particular, for its fuselage and empennage section.

More in particular, it is an object of the present invention to provide a reinforced panel structure for an aircraft, which is capable of withstanding high energy impacts, such as a bird strike, a blade release, or an engine debris impact, with a minimized damage.

The invention also refers to a method for manufacturing such a panel structure.

### Background of the invention

The use of composite materials formed by an organic matrix and unidirectionally orientated fibres, such as Carbon Fibre Reinforced Plastic (CFRP), in the manufacture of structural components of an aircraft, for example fuselage skin panels, torsion boxes, stringers, ribs, spars etc., is well known in the aeronautical industry.

Typically, skin panels are stiffened by means of several stringers longitudinally arranged, in order to provide strength and guarantee a proper buckling behavior of the skin panels. The stringers are conventionally co-cured, co-bonded, secondarily bonded or bolted to the skin panel.

These reinforced panels must be designed to meet both aerodynamics and structural requirements, such as a bird collision or blade release.

As known, bird-plane collisions during flight, take-off and landing happens every day, jeopardizing people and aircraft integrity.

Also, in propeller aircrafts, blades may break, in part or completely, or be entirely released from a propeller hub. Usually, these releases lead to serious damages in the aircraft structure and/or its systems due to the impact, and to unbalanced situations for the engine due to the broken or released blade.

For that, airworthiness authorities have requested aircraft manufacturers to consider the impact scenario due to a bird or a blade collision, in order to guarantee that the aircraft is capable of maintaining flight long enough to reach a landing site.

Current solutions are mainly based on providing localized reinforcements at spots indicated by debris trajectory studies. No significant modifications of the structure of the aircraft are considered, as penetration in the structure is allowed.

However, this situation changes if propeller engines are installed far from the central fuselage section, as in the rear section of the fuselage, where skin panels may be thinner and the residual strength after a blade impact may be compromised.

International patent application WO90/01857A1 relates to a device for diverting or distributing static electricity, particularly from surfaces on elements of plastic and/or composite material, particularly on aircraft. A composite panel structure designed to withstand impacts can be found in US 2001/0117309 A1.

It would therefore be desirable to provide technical means that comply with airworthiness requirements to ensure a safe continuation of flight and landing of an aircraft that had suffered a collision.

### Summary of the invention

The present invention overcomes the above mentioned drawbacks by providing the panel structure according to claim 1, which minimizes the damage caused by an impact.

Another aspect of the invention refers to an aircraft according to appended claim 6.

Finally, another aspect of the invention refers to a method for manufacturing a panel structure for an aircraft, comprising the steps according to appended claim 7.

The method of the invention provides a simple and cost-effective way of producing an impact reinforced skin panel.

### Brief description of the drawings

For a better comprehension of the invention, the following drawings are provided for illustrative and non-limiting purposes, wherein:
Figure 1 shows a schematic perspective view of a panel structure, according to a first embodiment.
Figure 2a-2c shows different configurations for the net-shaped layer.
Figure 3 shows an image in which the load transfer behavior of the net-shaped layer can be appreciated.
Figure 4 shows a schematic perspective view of a panel structure, according to a second embodiment.
Figure 5 shows a schematic perspective view of a panel structure, according to a third embodiment.
Figure 6 shows a schematic perspective view of the arrangement of the net-shaped layer between two composite layers to form the panel structure of Figure 1.

### Exemplary embodiments

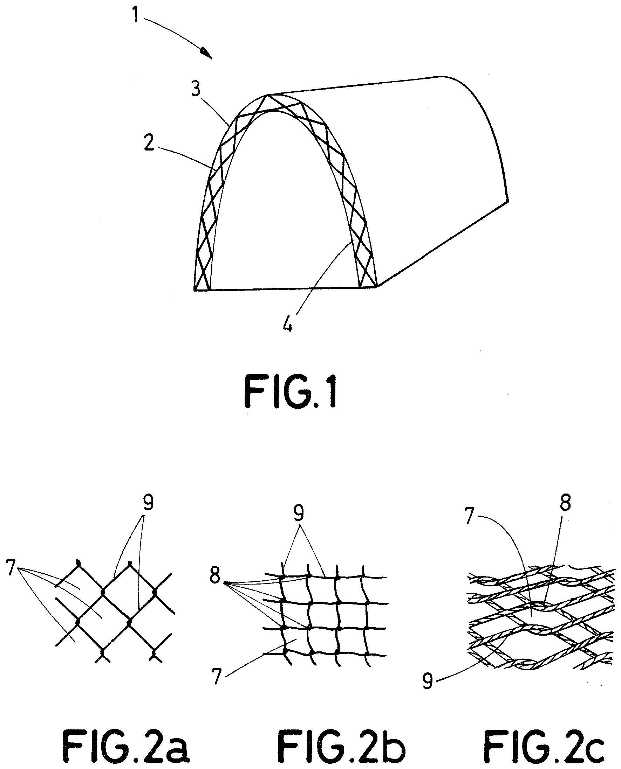

Figure 1 shows a panel structure 1 for an aircraft according to a preferred embodiment. According to the invention, the panel structure 1 comprises at least one composite layer 3, 4 and at least one net-shaped layer 2 attached to the at least one composite layer 3, 4, and wherein the net-shaped layer 2 comprises a material suitable to improve the impact resistance of the panel structure 1.

The panel structure 1 of Figure 1 comprises an outer composite layer 3, an inner composite layer 4, and a net-shaped layer 2 arranged between the outer and inner layers 3, 4.

The net-shaped layer 2 of Figure 1 is attached to two layers of composite material 3, 4, and it is thus integrated in the panel 1. This integration may be done by ATP (Automated Fiber/Tow Placement) in case of having a laminate skin panel (i.e. CFRP laminate).

Preferably, the net-shaped layer 2 comprises at least one of the following materials: steel, titanium, aluminium, carbon fiber, aramid fibers (Kevlar®), ultra high molecular polyethylene (Dyneema®), PBO (Zylon®).

With these materials, the net-shaped layer 2 provides an impact protection reinforcement that improves the damage tolerance capacity of a conventional panel skin of an aircraft. Thus, the panel of the invention increases the impact protection performance, and minimizes the damage area due to impacts.

The net-shaped layer 2 may have different configurations. Preferably, the net-shaped layer 2 has a polygonal configuration, such as a rhomboid configuration as shown in Figure 2a, or square configuration, as shown in Figure 2b.

In a preferred embodiment, the net-shaped layer 2 is set in knotted form, comprising a plurality of meshes 7 defined by corner knots 8 formed by at least two wires 9.

Also, as shown in Figure 2c, the net-shaped layer 2 has a double-chain link configuration. This embodiment provides a higher impact resistance to the panel structure 1.

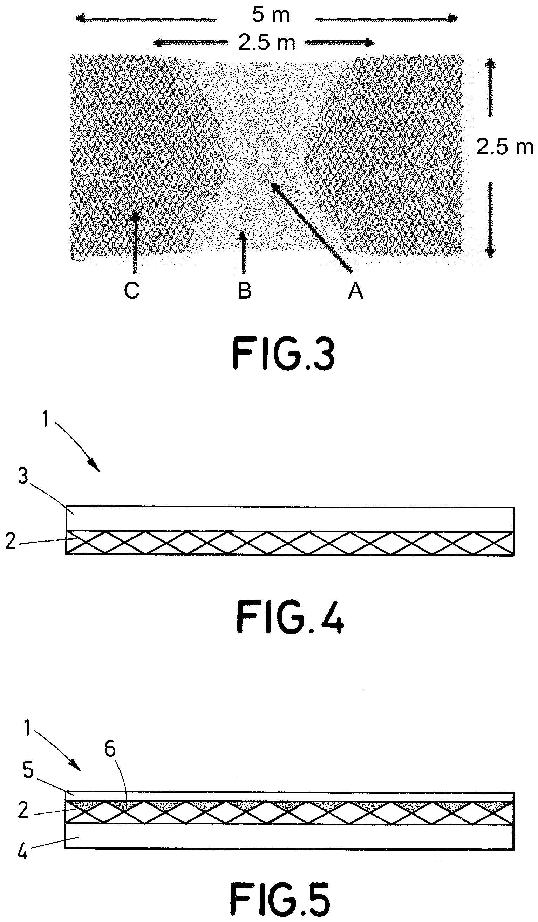

Figure 3 shows the levels of stress of a net-shaped layer 2 of 5 meters of width and 2,5 meters of height after a high energy impact. As shown, the loads are transferred along the net-shaped layer 2 generating areas of medium (B) and low (C) levels of stress from a high level of stress (A). This way, the net-shaped layer 2 provides a panel structure 1 optimized for transferring loads caused by a high energy impact.

Thus, the net-shaped layer 2 acts as a barrier in case of a high energy impact, spreading the loads of the impact over the entire layer, and minimizing the damage contention.

As shown in Figures 4 and 5, and according to other preferred embodiments, the panel structure 1 comprises a composite layer 3, 4 and a net-shaped layer 2 attached to the composite layer 3, 4.

In the embodiment of Figure 4, the net-shaped layer 2 is attached to an inner surface of an outer composite layer 3. Thus, the net-shaped layer 2 is added internally, for instance, being attached to the frames of the aircraft. The net-shaped layer 2 can be added to the aircraft baseline structure by means of rivets or bolts.

In the embodiment of Figure 5, the net-shaped layer 2 is attached to an outer surface of an inner composite layer 4. Thus, the net-shaped layer 2 is externally added, also, by means of rivets or bolts.

As shown in Figure 5, the panel structure 1 further comprises a laminate sheet material 5 joined to the net-shaped layer 2. Also, and according to a preferred embodiment, the panel structure 1 further comprises a foam material 6 to fill in the net-shaped layer 2.

The laminate sheet material 5 offers a smooth surface in order to fit the aerodynamic requirements of the panel structure 1. Also, the net-shaped layer 2 may be filled with a foam 6 or other light material to achieve an external smooth surface.

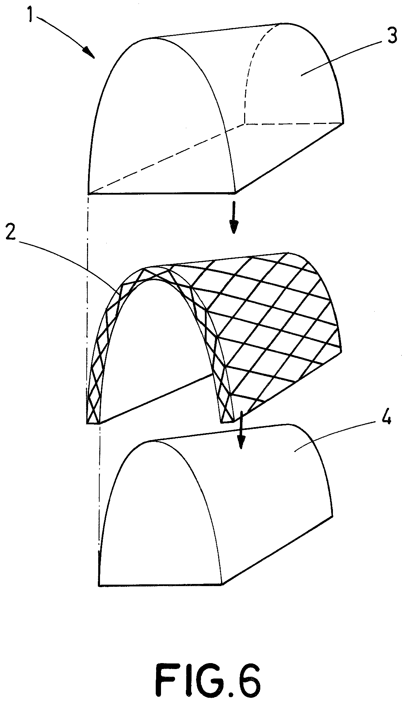

Finally, Figure 6 shows a preferred embodiment for the manufacturing method of the invention.

According to the invention, the method for manufacturing a panel structure 1 for an aircraft comprises the steps of providing at least one layer of composite material 3, 4, providing at least one net-shaped layer 2, the net-shaped layer 2 comprising a material having a double-chain link configuration suitable to improve the impact resistance of the at least one composite layer 3, 4, and attaching the net-shaped layer 2 to the at least one composite layer 3, 4 to form an impact reinforced panel structure 1.

Preferably, and as shown in Figure 6, the net-shaped layer 2 is attached to two layers of composite material 3, 4. Thus, the method comprises providing an inner 4 and an outer layer of composite material 3, providing a net-shaped layer 2, the net-shaped layer 2 comprising a material having a double-chain link configuration suitable to improve the impact resistance of the composite layers 3, 4, and attaching the net-shaped layer 2 to the two composite layers 3, 4 to form an impact reinforced panel structure 1.

## Claims

1. Panel structure (1) for an aircraft, configured for withstanding high energy impacts, such as a bird strike, a blade release, or an engine debris impact, said panel structure (1) comprising at least one composite layer (3, 4) and at least one net-shaped layer (2) attached to the at least one composite layer (3, 4), wherein the net-shaped layer (2) comprises a material suitable to improve the impact resistance of the panel structure (1),
- wherein the panel structure (1) further comprises a laminate sheet material (5) joined to the net-shaped layer (2),
- wherein the net-shaped layer (2) is attached to an outer surface of an inner composite layer (4), such that the net-shaped layer (2) is located between the inner composite layer (4) and the laminate sheet material (5),
- wherein the net-shaped layer (2) is filled with a foam material (6);
- and **characterised in that** the net-shaped layer (2) has a double-chain link configuration.

2. Panel structure (1) for an aircraft, according to claim 1, wherein the net-shaped layer (2) comprises at least one of the following materials: steel, titanium, aluminium, carbon fiber, aramid fibers, ultra high molecular polyethylene, PBO.

3. Panel structure (1) for an aircraft, according to any claim 1 or 2, wherein the net-shaped layer (2) has a polygonal configuration, such as a rhomboid or square configuration.

4. Panel structure (1) for an aircraft, according to any of the preceding claims, wherein the net-shaped layer (2) is set in knotted form, comprising a plurality of meshes (7) defined by corner knots (8) formed by at least two wires (9).

5. Panel structure (1) for an aircraft, according to any of the preceding claims, wherein the net-shaped layer (2) is attached to two layers of composite material (3, 4).

6. An aircraft, comprising a fuselage, an empennage, a skin covering the fuselage and the empennage, and a panel structure (1) according to any of the preceding claims, wherein at least part of the fuselage and/or empennage skin is formed by the panel structure (1).

7. Method for manufacturing a panel structure (1) for an aircraft, comprising the steps of:
providing at least one layer of composite material (3, 4),
providing at least one net-shaped layer (2), the net-shaped layer (2) comprising a material suitable to improve the impact resistance of the at least one composite layer (3, 4),
attaching the net-shaped layer (2) to the at least one composite layer (3, 4) to form an impact reinforced panel structure (1);
wherein the panel structure (1) further comprises a laminate sheet material (5) joined to the net-shaped layer (2);
wherein the net-shaped layer (2) is attached to an outer surface of an inner composite layer (4), such that the net-shaped layer (2) is located between the inner composite layer (4) and the laminate sheet material (5);
wherein the net-shaped layer (2) is filled with a foam material (6);
charaterised in that the net-shaped layer (2) has a double-chain link configuration.

8. Method according to claim 7, wherein the net-shaped layer (2) is attached to two layers of composite material (3, 4).

## Patentansprüche

1. Plattenstruktur (1) für ein Flugzeug, die eingerichtet ist, Einschlägen mit hoher Energie, wie etwa einem Vogelschlag, einer Turbinenschaufelablösung oder Einschlägen durch Maschinentrümmer zu widerstehen, wobei die Plattenstruktur (1) zumindest eine Verbundwerkstoffschicht (3, 4) und zumindest eine netzförmige Schicht (2) umfasst, die an der zumindest einen Verbundwerkstoffschicht (3, 4) angebracht ist, wobei die netzförmige Schicht (2) ein Material umfasst, das geeignet ist, die Einschlagswiderstandsfähigkeit der Plattenstruktur (1) zu verbessern,
- wobei die Plattenstruktur (1) ferner ein Schichtplattenmaterial (5) umfasst, das mit der netzförmigen Schicht (2) verbunden ist,
- wobei die netzförmige Schicht (2) an einer äußeren Oberfläche einer inneren Verbundwerkstoffschicht (4) angebracht ist, so dass die netzförmige Schicht (2) zwischen der inneren Verbundwerkstoffschicht (4) und dem Schichtplattenmaterial (5) angeordnet ist,
- wobei die netzförmige Schicht (2) mit einem Schaummaterial (6) verfüllt ist;
- und **dadurch gekennzeichnet, dass** die netzförmige Schicht (2) einen Aufbau einer Doppelketten-Verbindung besitzt.

2. Plattenstruktur (1) für ein Flugzeug gemäß Anspruch 1, wobei die netzförmige Schicht (2) zumindest eines der folgenden Materialien aufweist: Stahl, Titan, Aluminium, Karbonfaser, Aramidfasern, Polyethylen mit ultrahoher Molekülmasse, oder PBO.

3. Plattenstruktur (1) für ein Flugzeug gemäß Anspruch 1 oder 2, wobei die netzförmige Schicht (2) einen polygonalen Aufbau besitzt, wie etwa einen rhombenförmigen oder einen quadratischen Aufbau.

4. Plattenstruktur (1) für ein Flugzeug gemäß einem der vorhergehenden Ansprüche, wobei die netzförmige Schicht (2) in geknüpfter Form erstellt ist und eine Vielzahl von Maschen (7) umfasst, die durch Eckknoten (8) festgelegt sind, welche durch zumindest zwei Drähte (9) gebildet sind.

5. Plattenstruktur (1) für ein Flugzeug gemäß einem der vorhergehenden Ansprüche, wobei die netzförmige Schicht (2) an zwei Schichten aus Verbundwerkstoff (3, 4) angebracht ist.

6. Ein Flugzeug, umfassend einen Rumpf, ein Leitwerk, eine den Rumpf und das Leitwerk abdeckende Haut und eine Plattenstruktur (1) gemäß einem der vorhergehenden Ansprüche, wobei zumindest ein Teil der Haut des Rumpfes und/oder des Leitwerks durch die Plattenstruktur (1) gebildet wird.

7. Verfahren zum Herstellen einer Plattenstruktur (1) für ein Flugzeug, umfassend die Schritte:
Bereitstellen zumindest einer Schicht aus Verbundwerkstoff (3, 4),
Bereitstellen zumindest einer netzförmigen Schicht (2), wobei die netzförmige Schicht (2) ein Material umfasst, das geeignet ist, die Einschlagswiderstandsfähigkeit der zumindest einen Verbundwerkstoffschicht (3, 4) zu verbessern,
Anbringen der netzförmigen Schicht (2) an der zumindest einen Verbundwerkstoffschicht (3, 4) um eine gegenüber Einschlägen verstärkte Plattenstruktur (1) auszubilden;
wobei die Plattenstruktur (1) ferner ein Schichtplattenmaterial (5) umfasst, das mit der netzförmigen Schicht (2) verbunden ist;
wobei die netzförmige Schicht (2) an einer äußeren Oberfläche einer inneren Verbundwerkstoffschicht (4) angebracht wird, so dass die netzförmige Schicht (2) zwischen der inneren Verbundwerkstoffschicht (4) und dem Schichtplattenmaterial (5) angeordnet ist,
wobei die netzförmige Schicht (2) mit einem Schaummaterial (6) verfüllt wird;
**dadurch gekennzeichnet, dass** die netzförmige Schicht (2) einen Aufbau einer Doppelketten-Verbindung besitzt.

8. Verfahren gemäß Anspruch 7, wobei die netzförmige Schicht (2) an zwei Schichten aus Verbundwerkstoff (3, 4) angebracht wird.

## Revendications

1. Structure de panneau (1) pour un aéronef, configurée pour résister aux impacts à haute énergie, comme une collision avec un oiseau, un détachement d'aube ou un impact de débris de moteur, ladite structure de panneau (1) comprenant au moins une couche composite (3, 4) et au moins une couche en forme de filet (2) fixée sur la au moins une couche composite (3, 4), dans laquelle la couche en forme de filet (2) comprend un matériau approprié pour améliorer la résistance à l'impact de la structure de panneau (1),
dans laquelle la structure de panneau (1) comprend en outre un matériau en feuille stratifié (5) assemblé à la couche en forme de filet (2),
dans laquelle la couche en forme de filet (2) est fixée à une surface externe d'une couche composite interne (4), de sorte que la couche en forme de filet (2) est positionnée entre la couche composite interne (4) et le matériau en feuille stratifié (5),
dans laquelle la couche en forme de filet (2) est remplie avec un matériau en mousse (6) ;
et **caractérisée en ce que** :
la couche en forme de filet (2) a une configuration de liaison à double chaîne.

2. Structure de panneau (1) pour un aéronef selon la revendication 1, dans laquelle la couche en forme de filet (2) comprend au moins l'un des matériaux suivants : l'acier, le titane, l'aluminium, les fibres de carbone, les fibres d'aramide, le polyéthylène à poids moléculaire très élevé, le PBO.

3. Structure de panneau (1) pour un aéronef selon l'une quelconque des revendications 1 ou 2, dans laquelle la couche en forme de filet (2) a une configuration polygonale, telle qu'une configuration rhomboïde ou carrée.

4. Structure de panneau (1) pour un aéronef selon l'une quelconque des revendications précédentes, dans laquelle la couche en forme de filet (2) se présente sous une forme tricotée, comprenant une pluralité de mailles (7) définies par des nœuds d'angle (8) formés par au moins deux fils (9).

5. Structure de panneau (1) pour un aéronef selon l'une quelconque des revendications précédentes, dans laquelle la couche en forme de filet (2) est fixée sur deux couches de matériau composite (3, 4).

6. Aéronef comprenant un fuselage, un empennage, une peau recouvrant le fuselage et l'empennage, et une structure de panneau (1) selon l'une quelconque des revendications précédentes, dans lequel au moins une partie de la peau de fuselage et/ou d'empennage est formée par la structure de panneau (1).

7. Procédé pour fabriquer une structure de panneau (1) pour un aéronef comprenant les étapes suivantes :
prévoir au moins une couche de matériau composite (3, 4),
prévoir au moins une couche en forme de filet (2), la couche en forme de filet (2) comprenant un matériau approprié pour améliorer la résistance à l'impact de l'au moins une couche composite (3, 4),
fixer la couche en forme de filet (2) sur l'au moins une couche composite (3, 4) afin de former une structure de panneau renforcée d'impact (1) ;
dans lequel la structure de panneau (1) comprend en outre un matériau en feuille stratifié (5) assemblé à la couche en forme de filet (2) ;
dans lequel la couche en forme de filet (2) est fixée sur une surface externe d'une couche composite interne (4), de sorte que la couche en forme de filet (2) est positionnée entre la couche composite interne (4) et le matériau en feuille stratifié (5) ;
dans lequel la couche en forme de filet (2) est remplie avec un matériau en mousse (6) ;
**caractérisé en ce que** :
la couche en forme de filet (2) a une configuration de liaison à double chaîne.

8. Procédé selon la revendication 7, dans lequel la couche en forme de filet (2) est fixée sur deux couches de matériau composite (3, 4).
